# EUROPÄISCHE PATENTSCHRIFT

(11) **EP 3 130 108 B1**
(45) Veröffentlichungstag und Bekanntmachung des Hinweises auf die Patenterteilung: **01.06.2022**
(21) Anmeldenummer: 15716025.0
(22) Anmeldetag: 09.04.2015
(51) Int. Cl.: H04L 12/40, H04Q 1/02, H01R 13/641, H04L 43/50, H04L 41/12

(54) **SIGNALISIERUNG VON PORT-VERBINDUNGEN AN SWITCHEN**
SIGNALLING FROM PORT CONNECTIONS TO SWITCHES
SIGNALISATION DE LIAISONS DE PORT À DES COMMUTATEURS

(30) Priorität: 09.04.2014 DE 102014206871
(43) Veröffentlichungstag der Anmeldung: 15.02.2017
(73) Patentinhaber: Hirschmann Automation and Control GmbH, 72654 Neckartenzlingen (DE)
(72) Erfinder: KEHRER, Stephan, 72144 Dußlingen (DE); PELZER, Zbigniew, 73252 Lenningen (DE)
(74) Vertreter: Greif, Thomas
(86) Internationale Anmeldenummer: PCT/EP2015/057782
(87) Internationale Veröffentlichungsnummer: WO 2015/155313

(56) Entgegenhaltungen:
- WO-A1-2009/105632
- US-A1- 2006 047 800
- None

## Beschreibung

Die Erfindung betrifft ein Verfahren zum Betreiben eines Netzwerkes, wobei das Netzwerk mehrere Ports aufweisende Netzwerkinfrastrukturgeräte umfasst und die Netzwerkinfrastrukturgeräte über Kabel, die in jeweils einen Port eingesteckt sind, zur Datenübertragung miteinander verbunden oder verbindbar sind, wobei jeder Port ein Signalisierungsmittel aufweist, welches zwischen zumindest zwei Signalisierungszuständen umschaltbar ist, gemäß den Merkmalen des Oberbegriffes des Patentanspruches 1.

Die Erfindung basiert auf der bekannten Topologie eines Netzwerkes, wobei das Netzwerk mehrere Ports (auch als Eingang zu bezeichnen) aufweisende Netzwerkinfrastrukturgeräte umfasst und die Netzwerkinfrastrukturgeräte über Kabel, die in jeweils einen Port eingesteckt sind, zur Datenübertragung miteinander verbunden oder verbindbar sind, wobei jeder Port ein Signalisierungsmittel aufweist, welches zwischen zumindest zwei Signalisierungszuständen umschaltbar ist. Während der Datenübertragung blinken beispielsweise die Signalisierungsmittel derjenigen Ports der Netzwerkinfrastrukturgeräte, über die gerade Daten übertragen werden. Werden keine Daten übertragen, sind die zugehörigen Signalisierungsmittel ausgeschaltet.

Es ist oft schwierig in einer Anlage (Netzwerk mit angeschlossenen Geräten) mit vielen Kabel-Verbindungen, insbesondere Ethernet-Kabel-Verbindungen, vielen Switches und/oder Endgeräten die Korrektheit des Aufbaus und die einzelnen Port-Verbindungen auf die Korrektheit zu überprüfen. Hier leistet zwar das Industrial-HiVision-Programm von Hirschmann mit seiner Topologieerkennungs-Funktionalität ausgezeichnete Dienste, aber diese Möglichkeit steht nicht immer zur Verfügung.

Ferner ermöglicht es HiDiscovery von Hirschmann, die identifizierten Switch-Geräte, den physikalisch im Netz vorhandenen Geräten mit Hilfe der *Device-Signal-Funktion* zuzuordnen, indem das gesuchte Gerät "zum Blinken" gebracht wird (alle Port-LEDs des Switches blinken dabei synchron).

Im Moment lässt sich aber die Zuordnung der Enden eines einzelnen gesteckten Kabels (und damit eines Ports) zu seinem anderem Ende (damit zum Nachbar-Port) nicht immer einfach bewerkstelligen. Zu diesem Zweck muss man meistens mit der Hand am Kabel entlang von einem Ende bis zum anderen Ende des Kabels "fahren".

Das kann aber, besonders bei langen Kabeln und bei Kabeln, die mit anderen Kabeln verworrenen sind, umständlich sein, erfordert viel Konzentration und kann bei geschlossenen Kabelbäumen so gut wie unmöglich sein.

Aus der WO 2009/105632 A1 ist dazu bekannt, Patch Panels mit Signalisierungsmitteln auszustatten. Dabei werden zusammengehörige Ports an den Patch Panels durch die Signalisierungsmittel gekennzeichnet.

Die US 2006/0047800 A1 offenbart weiterhin ein Netzwerkmanagementsystem, welches LEDs als Signalisierungsmittel aufweist. Diese LEDs sind einem Panel zugeordnet und können anzeigen, welche zusammengehörigen Buchsen verbunden werden können.

Der Erfindung liegt daher die Aufgabe zugrunde, ein Verfahren zum Betreiben eines Netzwerkes hinsichtlich der Verkabelung von Netzwerkinfrastrukturgeräten untereinander zu verbessern.

Diese Aufgabe ist durch die Merkmale des Patentanspruches 1 gelöst.

Erfindungsgemäß ist vorgesehen, dass ein Signalisierungsmittel eines Ports des einen Netzwerkinfrastrukturgerätes und ein Signalisierungsmittel eines Ports eines weiteren Netzwerkinfrastrukturgerätes in einen als zusammengehörig erkennbaren Signalisierungszustand gebracht werden. Der Lösung liegt die Idee zugrunde, dass ein Port eines Netzwerkinfrastrukturgerätes über ein Kabel mit einem Port eines weiteren Netzwerkinfrastrukturgerätes verbunden ist. Soll überprüft werden, ob es gewollt ist, dass genau diese beiden Ports der beiden Netzwerkinfrastrukturgeräte korrekt mit dem Kabel miteinander verbunden sind, werden auf einen entsprechenden Befehl, beispielweise eines Netzwerkadministrators, diese beiden Ports angesprochen und deren Signalisierungsmittel, zum Beispiel Leuchtdioden, in einen solchen Signalisierungszustand gebracht, aus dem geschlossen werden kann, dass diese beiden Ports korrekt über das Kabel miteinander verbunden sind. Efindungsgemäß ist hier zu nennen, dass der Signalisierungszustand ein permanentes Leuchten der Leuchtdioden oder ein Blinken mit einer bestimmten Frequenz ist. Eine weitere Methode zur Feststellung der Zugehörigkeit der Ports ist auch, dass diese beiden Ports durch ein geeignetes Link-Discovery-Protokoll, wie z.B. LLDP (oder ein beliebiges anderes geeignetes Protokoll), angesprochen und deren Signalisierungsmittel, zum Beispiel wieder Leuchtdioden, in einen solchen Signalisierungszustand gebracht werden, aus dem geschlossen werden kann, dass diese beiden Ports korrekt über das Kabel miteinander verbunden sind. In vorteilhafter Weise kann somit nach der Erfindung die Zusammengehörigkeit der Ports leicht festgestellt werden.

Alternativ oder ergänzend dazu ist die Idee darin zu sehen, dass die Netzwerkinfrastrukturgeräte noch gar nicht oder nicht alle miteinander verkabelt sind und ein Port des einen Netzwerkinfrastrukturgerätes mit einem Port eines weiteren Netzwerkinfrastrukturgerätes über das Kabel miteinander verbunden werden sollen. Auch in diesem Fall werden durch einen entsprechenden Befehl von außen die Signalisierungsmittel der beiden Ports der beiden Netzwerkinfrastrukturgeräte, die miteinander verbunden werden sollen, in einen als zusammengehörig erkennbaren Signalisierungszustand gebracht. Auch hier ist es wieder denkbar, dass die Signalisierungsmittel, wie zum Beispiel die Leuchtdioden, der beiden Ports für eine gewisse Zeit dauerhaft eingeschaltet werden, um zu signalisieren, dass die beiden Ports, deren Leuchtdioden permanent leuchten, über das Kabel miteinander zu verbinden sind. So kann der Einrichter eines Netzwerkes schnell und auf einen Blick erfassen, welche Ports der Netzwerkinfrastrukturgeräte miteinander verbunden werden sollen und das Kabel in die entsprechenden Ports einstecken. Es ist auch weiterführend noch denkbar, dass man eine Kombination aus dieser Funktion und der Link-Blink-Funktion realisiert. Das könnte dann z.B. so aussehen, dass die beiden zu verbindenden (aber noch nicht gesteckten) Ports in einem bestimmten Schema signalisiert werden, um sie zu identifizieren. Wenn dann die Verbindung gesteckt wurde wird auf das Link-Blink Verfahren umgestellt und über eine unterscheidbar andere Signalisierung dargestellt, dass tatsächlich die beiden Ports wie gewünscht korrekt miteinander verbunden wurden.

Dabei ist es wichtig und von Vorteil, dass die Signalisierungsmittel des jeweiligen Ports der beiden Netzwerkinfrastrukturgeräte nicht nur in einen Signalisierungszustand gebracht werden, der sie als zusammengehörig erkennen lässt, sondern dass auch ein Unterschied zu dem Signalisierungszustand der übrigen Signalisierungsmittel der Ports des jeweils zugehörigen Netzwerkinfrastrukturgerätes bzw. aller übrigen Netzwerkinfrastrukturgeräte (z. B. dann, wenn mehrere Netzwerkinfrastrukturgeräte in einem Patchfeld zusammengefasst sind) erkennbar ist. Beispielsweise sind in üblicher Weise in einem Rack oder einem Patchfeld mehrerer Netzwerkinfrastrukturgeräte wie Switches übereinander und/nebeneinander zusammengefasst. Diese einzelnen Switche weisen eine Reihe von Ports auf (z. B. nebeneinander liegend, aber auch übereinander angeordnet), wobei jedem Port im Regelfall ein Signalisierungsmittel, beispielsweise eine Leuchtdiode, zugeordnet ist. Im normalen Betriebsfall, wenn ein solches Patchfeld verkabelt ist und in Betrieb genommen wurde, blinkt eine Vielzahl von Leuchtdioden durcheinander. In diesem Fall ist es wichtig, dass die zu signalisierenden Ports, die über ein Kabel miteinander verbunden werden sollen oder bei denen überprüft werden soll, ob diesen beiden Ports korrekt über ein Kabel miteinander verbunden sind, wobei die beiden Signalisierungsmittel in einen solchen Signalisierungszustand gebracht werden, der nicht nur erkennen lässt, dass diese beiden Ports zusammengehören, sondern der sich auch von den übrigen Signalisierungszuständen der übrigen Ports der weiteren Netzwerkinfrastrukturgeräte deutlich unterscheidet. An dieser Stelle kann daran gedacht werden, dass für den normalen Betriebsfall während der Datenübertragung die Signalisierungsmittel der Ports der Netzwerkinfrastrukturgeräte in üblicher Weise in Abhängigkeit von der Datenübertragung blinken und die beiden erkennbar zu machenden Ports dadurch kenntlich gemacht werden, dass deren Signalisierungsmittel zum Beispiel permanent leuchten, mit einer anderen Frequenz blinken oder in eine andere Farbe umgeschaltet werden. Insofern ist In Weiterbildung der Erfindung vorgesehen, dass die Signalisierungsmittel der beiden zusammengehörenden Ports gleichzeitig permanent leuchten, eine gleiche Farbe aufweisen oder synchron zueinander blinken, während die übrigen Ports der Netzwerkinfrastrukturgeräte blinken, eine andere Farbe aufweisen oder mit einer anderen Frequenz blinken.

Erfindungsgemäß ist zur Unterscheidung der Ports vorgesehen, dass die Signalisierungsmittel der beiden zusammengehörenden Ports gleichzeitig permanent leuchten und die übrigen Signalisierungsmittel der Ports zumindest dieser beiden Netzwerkinfrastrukturgeräte, insbesondere aller Netzwerkinfrastrukturgeräte des Netzwerkes, ausgeschaltet sind oder eine andere Helligkeit als die der leuchtenden Ports haben. Auch dadurch wird sichergestellt, dass die beiden als zusammengehörig zu erkennenden Ports sich deutlich von den Ports zumindest der beiden Netzwerkinfrastrukturgeräte, vorzugsweise aller Netzwerkinfrastrukturgeräte des Netzwerkes oder des Patchfeldes, unterscheiden.

Zusätzlich besteht noch die folgende Möglichkeit, dass nämlich die zugehörigen Signalisierungsmittel (zum Beispiel die Port-LEDs) in einer identischen, dynamischen Blinksequenz blinken, z.B. dass die Blinkfrequenz innerhalb einer gewissen Dauer von langsam nach schnell zunimmt, und dann wieder abnimmt (oder umgekehrt) oder es wird in einem bestimmten Morsecode oder ähnlichem geblinkt.

Ergänzend ist in Weiterbildung der Erfindung vorgesehen, dass die Signalisierungsmittel der beiden zusammengehörenden Ports synchron zueinander blinken und die übrigen Signalisierungsmittel der Ports zumindest dieser beiden Netzwerkinfrastrukturgeräte, insbesondere aller Netzwerkinfrastrukturgeräte des Netzwerkes, phasenversetzt blinken, ausgeschaltet sind oder eine andere Helligkeit als die der leuchtenden Ports haben. Auch damit ist eine deutliche Unterscheidung zwischen denjenigen Signalisierungsmittel der Ports, die die normale Datenübertragung signalisieren, und der beiden Ports, die miteinander verbunden werden sollen oder die miteinander verbunden sind, möglich.

Von besonderem Vorteil ist es in Weiterbildung der Erfindung, wenn die Signalisierungsmittel der beiden zusammengehörenden Ports in der gleichen Farbe angesteuert werden, wobei die übrigen Ports eine andere Farbe aufweisen. Dies kann besonders einfach durch die Verwendung zweifarbiger Signalisierungsmittel, wie zum Beispiel zweifarbiger Leuchtdioden, erzielt werden. So ist es denkbar, dass während des normalen Betriebes der Datenübertragung alle Signalisierungsmittel der Ports der Netzwerkinfrastrukturgeräte leuchten, zum Beispiel in Abhängigkeit der übertragenen Daten blinken, wohingegen die beiden Ports, die miteinander verbunden sind oder miteinander verbunden werden sollen, mit der gleichen regelmäßigen oder unregelmäßigen Frequenz blinken, jedoch in einer anderen Farbe. Dadurch kann aufgrund des Farbunterschiedes sehr schnell festgestellt werden, welche beiden Ports zusammengehören.

Der Startbefehl, die Signalisierungsmittel der beiden zusammengehörenden Ports in einen als zueinander gehörig erkennbaren Zustand zu versetzen, kann über einen Bediener, beispielsweise dem Netzwerkadministrator, von einem stationären oder mobilen externen Gerät ausgelöst werden, wobei es auch denkbar ist, diese Auslösung über ein Netzwerkinfrastrukturgerät selber, insbesondere in einer dort abgelegten Software, auszulösen. Während es auf der einen Seite möglich ist, dass die beiden Netzwerkinfrastrukturgeräte, deren Ports als zusammengehörig erkennbar gemacht werden sollen, in Sichtweite zueinander stehen, kann über das externe stationäre oder mobile Gerät, wie zum Beispiel einer Netzwerkmanagementstation, die Erkennbarkeit auch ausgelöst werden, wenn sich die beiden Netzwerkinfrastrukturgeräte in einer Distanz zueinander befinden, sodass die beiden sichtbar gemachten Ports nicht mehr erkennbar sind. Dies trifft insbesondere dann zu, wenn die beiden Netzwerkinfrastrukturgeräte auf große Distanz oder in unterschiedlichen Räumen angeordnet sind. Beispielsweise kann einer Bedienperson an dem einen Netzwerkinfrastrukturgeräte die Information mitgegeben werden, dass der Stecker des Kabels in denjenigen Port eingesteckt werden soll, in dem das Signalisierungsmittel in Blau leuchtet, wohingegen die anderen Signalisierungsmittel die Farbe Gelb haben. Sind die beiden Netzwerkinfrastrukturgeräte in unterschiedlichen Räumen angeordnet, kann der zweiten Bedienperson ebenfalls mitgegeben werden, dass der andere Stecker des Kabels ebenfalls in den Port des zweiten Netzwerkinfrastrukturgerätes eingesteckt werden soll, dessen Signalisierungsmittel in Blau leuchtet wobei auch hier die übrigen Signalisierungsmittel der Ports gelb blinken.

In Weiterbildung der Erfindung ist vorgesehen, dass mittels der Signalisierungsmittel des einen Netzwerkinfrastrukturgerätes und der Signalisierungsmittel eines weiteren Netzwerkinfrastrukturgerätes zunächst diese beiden Netzwerkinfrastrukturgeräte identifiziert werden und anschließend ein Signalisierungsmittel eines Ports dieses einen Netzwerkinfrastrukturgerätes und ein Signalisierungsmittel eines Ports dieses weiteren Netzwerkinfrastrukturgerätes in einen als zusammengehörig erkennbaren Signalisierungszustand gebracht werden. Hierdurch wird die Effektivität des Verfahrens noch erhöht, da einem Bediener oder Einrichter eines Netzwerkes über die Signalisierungsmittel des einen Netzwerkinfrastrukturgerätes signalisiert wird, dass dieses Netzwerkinfrastrukturgerät überprüft oder neu verkabelt werden soll. Gleiches gilt auch für das zweite Netzwerkinfrastrukturgerät. Nachdem somit die beiden Netzwerkinfrastrukturgeräte an sich identifiziert worden sind, kann anschließend das vorstehend beschriebene Verfahren durchgeführt werden, um an den beiden zunächst an sich identifizierten Netzwerkinfrastrukturgeräten den jeweiligen Port, der überprüft oder verkabelt werden soll, zu identifizieren.

Es wird daher mit anderen Worten vorgeschlagen, eine "Link-Blink" genannte (Link-Signal) Funktion vorzusehen, insbesondere in Bedien-Programmen und Geräten, insbesondere Switches, zu implementieren, die, wenn sie gestartet wird, dazu führt, dass die Link-LEDs auf den beiden Seiten einer gegebenen Verbindung deutlich erkennbar (am besten synchron) blinken und damit eindeutig die beide Enden des Kabels markieren.

Die Port-LEDs der beiden Geräte, in denen die *Link-Signal-Funktion* gestartet wurde, und die zum selben Link gehören, könnten z.B. im gleichen Rhythmus blinken. Um die Identifizierung der physikalisch über den Link verbundenen Geräte in einem größeren Aufbau einfacher zu gestalten ist auch zusätzlich zur reinen *Link-Signal-Funktion* eine Kopplung der *Device-Signal-Funktion* mit der *Link-Signal-Funktion* ("Link-Blink") denkbar. Diese Kopplung könnte in einer der beiden nachfolgend genannten Arten ausgeführt werden:
1. Beim Auswählen eines Ports, dessen Link-Partner man finden möchte, wird zuerst die *Device-Signal-Funktion* der beiden physikalisch über den Link verbundenen Geräte gestartet und dann wird nach einer gewissen Zeit (oder einer Bestätigung durch den Benutzer) an diesen beiden Geräten von der *Device-Signal-Funktion* auf die *Link-Signal-Funktion* an den verbundenen Ports umgeschaltet.
2. Beim Auswählen eines Ports, dessen Link-Partner man finden möchte, wird die *Device-Signal-Funktion* der beiden physikalisch über den Link verbundenen Geräte gestartet. Hierbei blinken alle Port-LEDs der beiden Geräte synchron. Die Identifizierung der konkreten verbundenen Ports über die *Link-Signal-Funktion* wird dadurch realisiert, dass die Port-LEDs der beiden physikalisch verbundenen Ports, die identifiziert werden sollen, in der entgegengesetzten Phase zu den restlichen Port-LEDs der beiden Geräte blinken.

Auf diese Weise können sowohl die korrekten Geräte als auch die konkret betroffenen Ports sehr schnell und einfach identifiziert werden.

Es wäre denkbar, diese Link-Identifizierungsfunktion *(Link-Signal-Funktion)* aus dem Programm HiDiscovery oder aber auch über das Webinterface oder aus Industrial-HiVision heraus durch das Anklicken des betroffenen Ports (der zu dem Link gehört) zu starten und die Blink-Funktion aus einem Kontextmenü auszuwählen.

Da das Mitführen eines Laptops nicht immer praktikabel ist, wäre alternativ auch die Bereitstellung einer App für Mobilgeräte möglich. Hier könnte der Anwender, wenn er sich mit dem Mobilgerät im selben Netz befindet wie der Switch, auf dem er die *Link-Signal-Funktion* durchführen möchte, den gewünschten Switch entweder direkt per IP-Adresse ansprechen oder über alternative Möglichkeiten identifizieren (z.B. "durchblinken" aller Netzwerkinfrastrukturgeräte wie z.B. Switches oder Router mit der *Device-Signal-Funktion* und bestätigen über die App, sobald das gewünschte Gerät blinkt). Im Anschluss könnte das Gerät graphisch dargestellt werden und der Anwender den Netzwerk-Port, dessen Link-Partner er identifizieren möchte, anwählen.

Das Blinken selber könnte über mehrere Möglichkeiten realisiert werden. Denkbar wäre z.B. einen der beiden Ports zyklisch aus- und einzuschalten (erzwungene LinkDown-/LinkUp-Aktionen) oder es könnte z.B. über ein MIB-Parameter das Blinken von beiden Nachbar-Ports gestartet werden. Es sollte dabei auf jeden Fall eine Möglichkeit gewählt werden, die die Verbindung zwischen den beiden Geräten während des Ausführens der *Link-Signal-Funktion* nicht beeinträchtigt.

Außerdem ist es denkbar, die "Link-Blink"-Funktion über eine Bedieneinheit des Netzwerkinfrastrukturgerätes, insbesondere des Switches oder des Routers, zu aktivieren. Diese Bedieneinheit kann alternativ oder ergänzend zu mobilen Geräten, wie Notebooks, Smartphones oder dergleichen, vorhanden sein.

Außerdem ist es denkbar, dass die erfindungsgemäße Funktion nicht direkt in dem Bereich, in dem sich das zumindest eine Netzwerkinfrastrukturgerät befindet, ausgelöst wird. Im Regelfall stehen zwar die beiden Geräte, die über das Kabel miteinander verbunden sind, in räumlicher Nachbarschaft, so dass für einen Bediener beide Geräte im Blickfeld sind und er erkennen kann, dass die erfindungsgemäße Funktion aktiviert wurde. Daraufhin ist auch erkennbar, welches Kabel mit seinen beiden Enden an dem jeweiligen Netzwerkinfrastrukturgerät angeschlossen ist. Es kann aber auch vorkommen, dass die beiden Geräte, die über das Kabel miteinander verbunden sind, nicht in räumlicher Nähe angeordnet sind. Außerdem kann es vorkommen, dass die erfindungsgemäße Funktion nicht im Bereich eines Gerätes oder beider Geräte ausgelöst wird. In einem solchen Fall ist daran zu denken, dass die erfindungsgemäße Funktion von einer weit entfernten Netzwerkmanagementstation ausgelöst wird, die über ein entsprechendes Netzwerk und zugehörige Verbindungen (drahtlos oder drahtgebunden) mit den Netzwerkinfrastrukturgeräten verbunden ist. In solchen Fällen, bei denen die Funktion nicht direkt an den zumindest einen Netzwerkinfrastrukturgerät ausgelöst wird, kann auch daran gedacht werden, die erfindungsgemäße Funktion dadurch zu nutzen, dass zwei oder mehr als zwei Personen über entsprechende Kommunikationsmittel, z. B. Telefon, miteinander in Verbindung stehen und nach dem Auslösen der "Link-Blink"-Funktion dasjenige Kabel identifizieren, das mit seinem jeweiligen Ende in den zugehörigen Port eines jeweiligen Netzwerkinfrastrukturgerät eingesteckt ist.

Alternativ dazu ist auch denkbar, das Kabel mit seinem Stecker aus einem Gerät herauszuziehen, ein weiteres entsprechend gestaltetes Gerät dazwischen zu schalten, welches dann die erfindungsgemäße Funktion an den beiden Netzwerkinfrastrukturgeräten auslöst. Je nach Übertragungsprotokoll führt dieses Zwischenschalten eines entsprechend gestalteten Gerätes zu einer Unterbrechung oder zu keiner Unterbrechung der Datenübertragung desjenigen Kabels, dessen einer Stecker aus dem Netzwerkinfrastrukturgerät heraus gezogen worden ist.

Vorteile dieser Idee:
Mit dieser Link-Signal-Funktion ("Link-Blink") ist es möglich, den Aufbau einer komplizierten Kommunikationsanordnung besser nachvollziehen und kontrollieren zu können, indem die beiden Enden eines Kabels, insbesondere eines Ethernet-Kabels, und damit die beiden (oder mehrere) Nachbar-Ports, die zusammengehören, leichter zu finden sind.

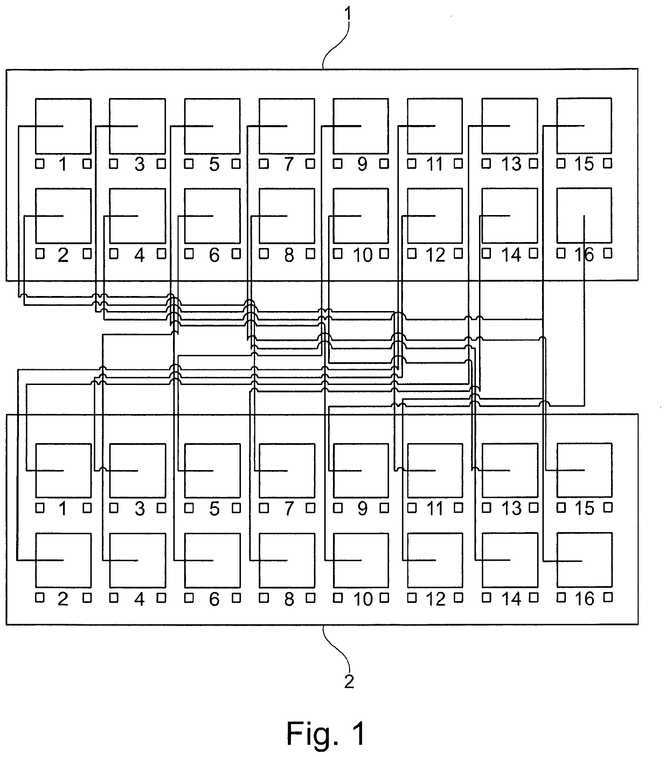

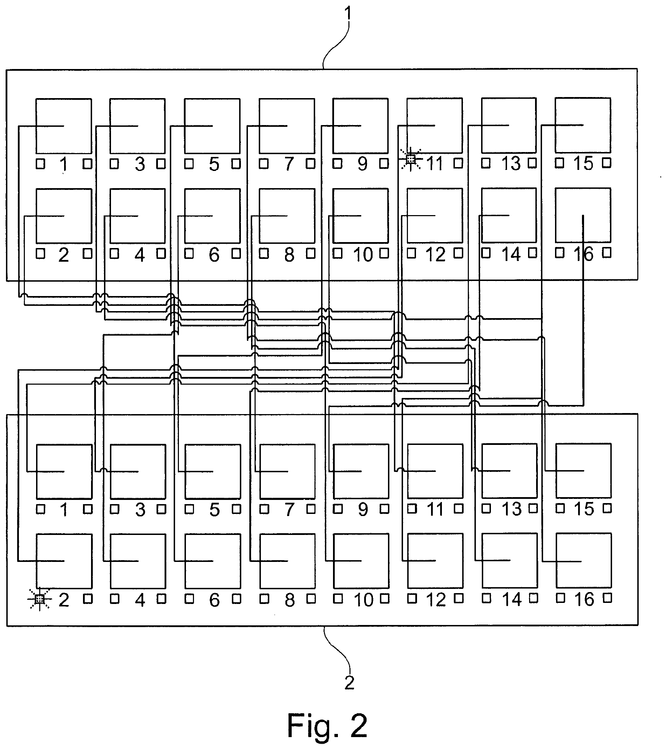

Die Erfindung ist beispielhaft anhand zweier Netzwerkinfrastrukturgeräte in den Figuren 1 und 2 dargestellt.

Figur 1 zeigt ein Netzwerkinfrastrukturgerät 1 und ein weiteres Netzwerkinfrastrukturgerät 2 eines Netzwerkes, wobei im Regelfall innerhalb des Netzwerkes mehr als zwei Netzwerkinfrastrukturgeräte vorhanden sind. Diese sind im Regelfall auch nicht, wie in Figur 1 dargestellt, benachbart zueinander angeordnet, sondern z. B. in unterschiedlichen Räumen, in größeren Racks oder sogar weit voneinander an unterschiedlichen Standorten installiert.

Beide Netzwerkinfrastrukturgeräte weisen Ports 1-16 auf, die in diesem Ausführungsbeispiel schon wie dargestellt miteinander über Netzwerkkabel verbunden sind. Aufgrund der unübersichtlichen Verkabelung, wie dies in Figur 1 zwischen den beiden Netzwerkinfrastrukturgeräten 1 und 2 erkennbar ist, ist nicht ohne weiteres erkennbar, dass z. B. die Ports 2 und 11 über ein Netzwerkkabel miteinander verbunden sind. Soll überprüft werden, ob diese beiden Ports korrekt miteinander verbunden sind oder aber, wenn noch keine Verkabelung stattgefunden hat und die beiden Ports 11 des Netzwerkinfrastrukturgerätes 1 und der Port 2 des Netzwerkinfrastrukturgerätes 2 miteinander verbunden werden sollen, wird die vorstehend beschriebene Erfindung angewandt, in dem die Signalisierungsmittel der beiden Ports aktiviert werden. Dies ist in Figur 2 erkennbar, bei der dargestellt ist, dass das Signalisierungsmittel des Ports 11 des Netzwerkinfrastrukturgerätes 1 aktiviert ist, genauso wie das Signalisierungsmittel des Ports 2 des Netzwerkinfrastrukturgerätes 2. In diesem Fall kann bei schon erfolgter Verkabelung nachvollzogen werden, dass diese beiden Ports über das zugeordnete Netzwerkkabel korrekt miteinander verbunden sind.

Hat noch keine Verbindung der Ports mittels Netzwerkkabel stattgefunden, erleichtert das Aktivieren (z. B. blinken) der Signalisierungsmittel des Ports 11 des Netzwerkinfrastrukturgerätes 1 und des Ports 2 des Netzwerkinfrastrukturgerätes 2 das korrekte Einstecken des Netzwerkkabels für die Inbetriebnahme zumindest dieser beiden Netzwerkinfrastrukturgeräte 1, 2. Der Vollständigkeit halber sei erwähnt, dass in diesen beiden in den Figuren 1 und 2 gezeigten Ausführungsbeispielen jedem Port ein Signalisierungsmittel zugeordnet ist, mit dem die "Link-Blink-Funktion" durchgeführt werden kann, und zusätzlich ein weiteres Signalisierungsmittel vorhanden ist, dass in Abhängigkeit des Datenaustausches zwischen den Netzwerkinfrastrukturgeräten über deren Ports aktiviert wird.

Erfindungsgemäß wird nur ein Signalisierungsmittel je Port eingesetzt, welches dann aktiviert wird, wenn die "Link-Blink-Funktion" durchgeführt wird und das ansonsten den normalen Netzwerkverkehr durch im Regelfall unregelmäßiges aufleuchten signalisiert.

## Patentansprüche

1. Verfahren zum Betreiben eines Netzwerkes, wobei das Netzwerk mehrere Ports aufweisende Netzwerkinfrastrukturgeräte umfasst und die Netzwerkinfrastrukturgeräte über Kabel, die in jeweils einen Port eingesteckt sind, zur Datenübertragung miteinander verbunden oder verbindbar sind, wobei jeder Port ein Signalisierungsmittel aufweist, welches zwischen zumindest zwei Signalisierungszuständen umschaltbar ist, **dadurch gekennzeichnet, dass das** Signalisierungsmittel während der Datenübertragung blinkt und das Signalisierungsmittel ausgeschaltet ist, wenn keine Daten übertragen werden, wobei das Signalisierungsmittel eines Ports des einen Netzwerkinfrastrukturgerätes und das Signalisierungsmittel eines Ports eines weiteren Netzwerkinfrastrukturgerätes in einen als zusammengehörig erkennbaren Signalisierungszustand gebracht werden, wobei das Verfahren an einem Netzwerkinfrastrukturgerät oder einem externen Gerät, gestartet wird, wobei die Signalisierungsmittel der beiden zusammengehörenden Ports gleichzeitig permanent leuchten und die übrigen Signalisierungsmittel der Ports zumindest dieser beiden Netzwerkinfrastrukturgeräte ausgeschaltet sind oder eine andere Helligkeit als die der leuchtenden Ports haben oder die Signalisierungsmittel der beiden zusammengehörenden Ports synchron zueinander blinken und die übrigen Signalisierungsmittel der Ports zumindest dieser beiden Netzwerkinfrastrukturgeräte phasenversetzt blinken, ausgeschaltet sind oder eine andere Helligkeit als die der leuchtenden Ports haben.

2. Verfahren nach einem der vorhergehenden Ansprüche, **dadurch gekennzeichnet, dass** das externe Gerät als Netzmanagementstation ausgeführt ist.

3. Verfahren nach Anspruch 1, **dadurch gekennzeichnet, dass** die Signalisierungsmittel der beiden zusammengehörenden Ports in der gleichen Farbe angesteuert werden.

4. Verfahren nach einem der vorhergehenden Ansprüche, **dadurch gekennzeichnet, dass** mittels der Signalisierungsmittel des einen Netzwerkinfrastrukturgerätes und der Signalisierungsmittel eines weiteren Netzwerkinfrastrukturgerätes zunächst diese beiden Netzwerkinfrastrukturgeräte identifiziert werden und anschließend ein Signalisierungsmittel eines Ports dieses einen Netzwerkinfrastrukturgerätes und ein Signalisierungsmittel eines Ports dieses weiteren Netzwerkinfrastrukturgerätes in einen als zusammengehörig erkennbaren Signalisierungszustand gebracht werden.

5. Verfahren nach einem der vorhergehenden Ansprüche, **dadurch gekennzeichnet, dass** das Kabel mit seinem Stecker aus dem Port des einen Netzwerkinfrastrukturgerätes herausgezogen und ein Gerät dazwischen geschaltet wird, welches dann das Verfahren an den beiden über dieses Kabel miteinander verbundenen Netzwerkinfrastrukturgeräten auslöst.

6. Verfahren nach einem der vorhergehenden Ansprüche, **dadurch gekennzeichnet, dass** die Netzwerkinfrastrukturgeräte noch gar nicht oder nicht alle miteinander verkabelt sind und ein Port des einen Netzwerkinfrastrukturgerätes mit einem Port eines weiteren Netzwerkinfrastrukturgerätes über das Kabel miteinander verbunden werden.

7. Verfahren nach Anspruch 1, **dadurch gekennzeichnet, dass** die Signalisierungsmittel der beiden zusammengehörenden Ports gleichzeitig beide in einer gleichartigen abnehmenden und/oder zunehmenden Blinksequenz betrieben werden.

## Claims

1. Method for operating a network, wherein the network comprises multiple network infrastructure devices having ports and the network infrastructure devices are connected or connectable to one another by way of cables, which are plugged into a respective port, for the purpose of data transmission, wherein each port has a signalling means that is switchable between at least two signalling states, **characterized in that** the signalling means flashes during data transmission and the signalling means is off when no data are transmitted, wherein the signalling means of a port of one network infrastructure device and the signalling means of a port of a further network infrastructure device are put into a signalling state that is discernible as related, wherein the method is started on a network infrastructure device or an external device, wherein the signalling means of the two related ports are lit continuously and the other signalling means of the ports of at least these two network infrastructure devices are off or have a different brightness from that of the lit ports, or the signalling means of the two related ports flash in sync with one another and the other signalling means of the ports of at least these two network infrastructure devices flash out of phase, are off or have a different brightness from that of the lit ports.

2. Method according to one of the preceding claims, **characterized in that** the external device is embodied as a network management station.

3. Method according to Claim 1, **characterized in that** the signalling means of the two related ports are actuated in the same colour.

4. Method according to one of the preceding claims, **characterized in that** the signalling means of one network infrastructure device and the signalling means of a further network infrastructure device are initially used to identify these two network infrastructure devices, and a signalling means of a port of this one network infrastructure device and a signalling means of a port of this further network infrastructure device are subsequently put into a signalling state that is discernible as related.

5. Method according to one of the preceding claims, **characterized in that** the cable with its connector is removed from the port of one network infrastructure device and a device is connected in between that then triggers the method on the two network infrastructure devices connected to one another by way of this cable.

6. Method according to one of the preceding claims, **characterized in that** the network infrastructure devices are not yet or not all wired up to one another and a port of one network infrastructure device and a port of a further network infrastructure device are connected to one another by way of the cable.

7. Method according to Claim 1, **characterized in that** the signalling means of the two related ports are simultaneously both operated in a decreasing and/or increasing flash sequence of the same type.

## Revendications

1. Procédé d'exploitation d'un réseau, le réseau comprenant des appareils d'infrastructure de réseau présentant plusieurs ports, et les appareils d'infrastructure de réseau étant reliés ou pouvant être reliés entre eux par des câbles qui sont branchés sur un port respectivement en vue de la transmission de données, chaque port présentant un moyen de signalisation qui peut être commuté entre au moins deux états de signalisation,
**caractérisé en ce que** le moyen de signalisation clignote pendant la transmission de données, et le moyen de signalisation est éteint si aucune donnée n'est transmise, le moyen de signalisation d'un port dudit un appareil d'infrastructure de réseau et le moyen de signalisation d'un port d'un autre appareil d'infrastructure de réseau sont mis dans un état de signalisation permettant de reconnaître qu'ils vont ensemble, le procédé étant lancé sur un appareil d'infrastructure de réseau ou un appareil externe, dans lequel les moyens de signalisation des deux ports allant ensemble sont simultanément allumés en permanence, et les autres moyens de signalisation des ports au moins de ces deux appareils d'infrastructure de réseau sont éteints ou présentent une luminosité différente des ports allumés, ou les moyens de signalisation des deux ports allant ensemble clignotent de manière synchrone l'un avec l'autre, et les autres moyens de signalisation des ports au moins de ces deux appareils d'infrastructure de réseau clignotent en décalage de phase, sont éteints ou présentent une luminosité différente des ports allumés.

2. Procédé selon l'une quelconque des revendications précédentes, **caractérisé en ce que** l'appareil externe est réalisé sous forme de station de gestion de réseau.

3. Procédé selon la revendication 1, **caractérisé en ce que** les moyens de signalisation des deux ports allant ensemble sont pilotés avec la même couleur.

4. Procédé selon l'une quelconque des revendications précédentes, **caractérisé en ce qu'**à l'aide des moyens de signalisation dudit un appareil d'infrastructure de réseau et des moyens de signalisation d'un autre appareil d'infrastructure de réseau, d'abord ces deux appareils d'infrastructure de réseau sont identifiés et ensuite un moyen de signalisation d'un port dudit un appareil d'infrastructure de réseau et un moyen de signalisation d'un port de cet autre appareil d'infrastructure de réseau sont amenés dans un état de signalisation qui permet de reconnaître qu'ils vont ensemble.

5. Procédé selon l'une quelconque des revendications précédentes, **caractérisé en ce que** le câble muni de son connecteur est retiré du port dudit un appareil d'infrastructure de réseau et un appareil est interconnecté qui déclenche alors le procédé sur les deux appareils d'infrastructure de réseau reliés l'un à l'autre par ce câble.

6. Procédé selon l'une quelconque des revendications précédentes, **caractérisé en ce que** les appareils d'infrastructure de réseau ne sont pas encore ou ne sont pas tous câblés les uns avec les autres, et un port dudit un appareil d'infrastructure de réseau est relié à un port d'un autre appareil d'infrastructure de réseau par le câble.

7. Procédé selon la revendication 1, **caractérisé en ce que** les moyens de signalisation des deux ports allant ensemble sont exploités simultanément tous les deux avec une séquence de clignotement similaire décroissante et/ou croissante.
